# EUROPÄISCHE PATENTSCHRIFT

(11) **EP 1 200 718 B1**
(45) Veröffentlichungstag und Bekanntmachung des Hinweises auf die Patenterteilung: **15.03.2006**
(21) Anmeldenummer: 00945945.4
(22) Anmeldetag: 21.07.2000
(51) Int. Cl.: F02B 27/00

(54) **SAUGROHRANLAGE**
SUCTION PIPE UNIT
ENSEMBLE COLLECTEUR D'ADMISSION

(30) Priorität: 03.08.1999 DE 19936470
(43) Veröffentlichungstag der Anmeldung: 02.05.2002
(73) Patentinhaber: Mann + Hummel GmbH, 71638 Ludwigsburg (DE)
(72) Erfinder: PIETROWSKI, Herbert, 74385 Pleidelsheim (DE); JESSBERGER, Thomas, D-71277 Rutesheim (DE); KOCH, Ingo, D-71634 Ludwigsburg (DE); NEUSCHWANDER, Helmut, D-71636 Ludwigsburg (DE); MANDEL, Eckehard, D-71640 Ludwigsburg (DE)
(74) Vertreter: Voth, Gerhard
(86) Internationale Anmeldenummer: PCT/EP2000/007011
(87) Internationale Veröffentlichungsnummer: WO 2001/009493

(56) Entgegenhaltungen:
- WO-A-00/65214
- WO-A1-94/04803
- WO-A1-95/16112
- WO-A1-96/02743
- DE-A- 19 603 758
- DE-A- 19 651 642

## Beschreibung

Die Erfindung betrifft eine Saugrohranlage für eine Mehrzylinder- Brennkraftmaschine nach dem Oberbegriff des Patentanspruches 1.

### Stand der Technik

Es ist aus der DE 43 44 504 eine Saugrohranlage bekannt, welche für eine Mehrzylinder-Brennkraftmaschine einen rohrförmigen Ansaugverteiler aufweist, von dem erste Einzelsaugrohre ausgehen, die zu den einzelnen Zylindern führen. Zweite, kürzere Einzelsaugrohre gehen ebenfalls von dem Ansaugverteiler aus und münden in die zugehörigen Einzelsaugrohre. Der Ansaugverteiler und die ersten und zweiten Einzelsaugrohre sind von einem einstückigen Bauteil gebildet, das eine in die zweiten Einzelsaugrohre für die Zylinder schneidende Längsbohrung aufweist. In die Längsbohrung ist eine Schaltwalze eingesetzt, die für jedes zweite Einzelsaugrohr einen Durchbruch aufweist, der durch Drehen der Schaltwalze in oder außer Fluchtung mit dem betreffenden zweiten Einzeisaugrohr gebracht werden kann.

Die Dichtheit der Schaltwalze wird jedoch nur durch den Einsatz von zusätzlichen Dichtelementen, wie z.B. Dichtringen oder -käfigen gewährleistet. Bei der Montage können sich diese Dichtelemente jedoch verhakeln, was die Montage kompliziert. Außerdem erfordert die Auslegung und Herstellung der Dichtelemente ein hohes Maß an Sorgfalt und Abstimmung, um die erforderliche Dichtkraft zu erzielen. Desweiteren ist ein Klappern der Schaltwalze nicht auszuschließen.

Weiterhin ist aus der EP 0 747 587 eine Steuereinrichtung zur Einstellung der Rohrlänge eines Saugrohres durch Steuerklappen bekannt. Die Steuerklappen sind in einem Führungsring drehbar gelagert. Der Führungsring ist mit den Steuerklappen einstückig ausgeführt. An die Steuerklappen sind zwei gegenüberliegende Lagerzapfen angeformt, die den Führungsring durchsetzen.

Bei dieser Ausführung ist jedoch sehr viel Einbauraum erforderlich und sie ist daher nicht bei Ausführung mit begrenztem Einbauraum einsetzbar.

Die DE 195 390 424 offenbart eine Saugrohranlage für einen Verbrennungsmotor die einen motorseitigen Flansch aufweist. Der motorseitige Flansch ist mit Saugrohren, die von einem Sammelraum ausgehen, und dem Zylinderkopfflansch verbunden. Zur Befestigung auf dem Zylinderkopfflansch enthält der motorseitige Flansch Montagebuchsen. Der Sammelraum ist von einem verstellbaren Trennelement unterteilt, das den Sammelraum der Saugrohre trennen oder verbinden kann, wodurch der Aufladungseffekt der Zylinder beeinflußt wird.

Der motorseitige Flansch wird zur Befestigung der Saugrohranlage an dem Zylinderkopfflansch verwendet. Dieses Bauteil weist jedoch ein großes Volumen auf und erhöht das Teilegewicht, außerdem ist der Montageaufwand durch den Einsatz mehrerer Bauteile größer. Durch den Mehraufwand und die größere Anzahl an Einzelbauteilen sind die Bauteilkosten der Saugrohranlage höher.

Das Dokument WO 94/04803 offenbart eine Saugrohranlage für eine Mehrzylinderbrennkraftmaschine. Die Saugrohranlage weist einen rohrförmigen Ansaugverteiler auf von dem erste Einzelsaugrohre ausgehen. Welche sich in einem Bogen um den Ansaugverteiler erstrecken und zu den einzelnen Zylindern der Zylinderbänke führen. Zwei kürzere Einzelsaugrohre gehen ebenfalls von dem Ansaugverteiler aus und münden in die zugehörigen Einzelsaugrore. Die zweiten Einzelsaugrohre sind von einer Längsbohrung geschnitten. In diese Längsbohrung sind Schwenkklappen, welche auf einer gemeinsamen Welle angeordnet sind eingeschoben.

Das Dokument WO 00/65214 offenbart einen Schaltklappenverband aus montagegespritzten Schaltklappen. Die Schaltklappen bestehen aus Klappenflügeln und einem Klappenrahmen. Hierbei ist der gesamte Schaltklappenverband als eine Einheit montierbar.

Aufgabe der Erfindung ist es, eine Saugrohranlage der eingangs genannten Art so fortzubilden, daß ein geringer Einbauraum, einfache Montage und minimale Leckage kostengünstig ermöglicht werden kann. Diese Aufgabe wird durch die Merkmale des Patentanspruches 1 gelöst.

### Vorteile der Erfindung

Das erfindungsgemäße Schaltelement enthält Klappen, die auf einer Achse angeordnet und in einen gemeinsamen Schaltelementrahmen eingebracht sind. Mit Klappen sind in diesem Zusammenhang Verschlusselemente im weiteren Sinne zu verstehen, insbesondere Drehklappen und Schieber, die translatorisch verstellt werden. Dieses Schaltelement ist als komplette Einheit ausgeführt, welche dichtend in die Saugrohranlage eingebracht ist. Da jede Klappe nur eine geringe Umfangsfläche besitzt, die mit dem umgebenden Bauteil in Kontakt steht, ist die effektive Dichtlänge sehr gering. Durch die Anordnung der Klappen auf einer durchgängigen Achse kann diese ohne zusätzliche Lagerstellen und Verbindungsstellen der Klappen untereinander direkt in dem Schaltelementrahmen abgestützt werden. Dadurch ist das Schaltelement auch für kleine Einbauräume geeignet.

Es ist vorteilhaft, daß das Schaltelement in eine Öffnung in der Saugrohranlage eingeschoben und befestigt ist. Somit ist eine einfache Montage möglich und das Schaltelement kann bei Bedarf ausgetauscht werden.

Eine weitere Ausführungsform ist das direkte, dichte Anspritzen der Saugrohranlage an das Schaltelement. Hierbei kann auf eine Befestigungseinheit, ein Dichtmittel und den Montagevorgang verzichtet werden.

Eine weitere Ausführung der Einbringung des Schaltelements in die Saugrohranlage, ist die Ausbildung der Saugrohranlage in zwei Formhälften, zwischen die das Schaltelement dichtend durch z.B. Schrauben oder Verschnappen mit einer Formhälfte eingebracht ist. Die beiden Formhälften werden dann unter Verwendung einer Dichtung zusammengefügt z.B. verschraubt.

Eine besondere Ausführungsform ist das Verschweißen der Formhälften mit dem Schaltelement. Hierbei wird das Schaltelement in einer Aufnahme eingesetzt und anschließend werden die Saugrohrhälften dichtend miteinander verschweißt, dadurch ist das Schaltelement in der Saugrohranlage fixiert. Bei einer derartigen Ausführung ist das Schaltelement so in die Aufnahme eingesetzt, daß zwischen den Bauteilen keine Leckage entsteht. Außerdem entfällt bei dieser Ausführung ein Dichtsystem zwischen den Saugrohrhälften.

Eine alternative Lösung der gestellten Aufgabe ist in einer Saugrohranlage mit einem Ansaugverteiler, davon ausgehenden Einzelsaugrohren und einem Schaltelement zu sehen, wobei das Schaltelement als komplette Einheit in einer Aufnahme an der Saugrohranlage eingebracht ist und an den Zylinderkopfflansch anschließt. Das Schaltelement dient zum Verschließen oder Freigeben eines Strömungsquerschnittes. Beim Freigeben des Strömungsquerschnittes sind verschiedene Varianten denkbar, wie das vollständige Freigeben eines durch die Einzelsaugrohre gebildeten Strömungsquerschnitts. Es sind aber auch teilweise Freigaben der Strömungsquerschnitte denkbar, hierbei kann durch die Offenstellung, der Klappe ein Drall erzeugt werden, der den Füllgrad der einzelnen Zylinder beeinflußt.

Eine weitere Variante ist die Verwendung von zwei Strömungsquerschnitten, welche an dem selben Einzelsaugrohr anschließen und somit je nach Bedarf die Gesamtströmungsquerschnittsftäche vergrößert oder verkleinert werden kann. Durch vollständiges Verschließen einer Strömungsquerschnittsfläche muß die Luft durch die andere Strömungsquerschnittsfläche strömen. Durch öffnen der geschlossenen Strömungsquerschnittsfläche wird die gesamte Strömungsquerschnittsfläche des Einzelsaugrohres vergrößert, somit kann mehr Luft durchströmen. Die Aufnahme der Saugrohranlage für das Schaltelement ist derart gestaltet, daß das Schaltelement dichtend eingebracht wird. Das Schaltelement stellt die Verbindung zwischen der Saugrohranlage und dem Zylinderkopfflansch her, wobei die Saugrohranlage keine Berührungsstellen mit dem Zylinderkopfflansch aufweisen muß.

Eine weitere Ausgestaltung der Erfindung sieht eine Anschlußfläche der Saugrohranlage an den Zylinderkopfflansch vor. Hierbei ist die Aufnahme für das Schaltelement derart gestaltet, daß die Anschlußfläche an die Aufnahme angeformt ist und die Anschlußfläche der Saugrohranlage an den Zylinderkopfflansch anschließt.

Gemäß einer weiteren Ausgestaltung der Saugrohranlage sind Montagebuchsen an das Schaltelement angebracht. Diese Montagebuchsen bestehen aus einem Material, welches nicht relaxiert, wie z. B. Metall oder Keramik. Die Montagebuchsen können nachträglich in das Schaltelement eingebracht werden, insbesondere in den Schaltelementrahmen. Hierbei besteht die Möglichkeit, die Montagebuchsen in das Schaltelement einzupressen oder einzugießen. Eine weitere Möglichkeit, die Montagebuchsen in das Schaltelement einzubringen, besteht darin, diese in eine Spritzgußform einzulegen und das Schaltelement darum zu spritzen.

Eine vorteilhafte Ausbildung des Erfindungsgedankens ist die Einbringung der Klappen in einen Klappenrahmen, wodurch das Spiel bzw. die Leckage der Klappen im Klappenrahmen eingestellt werden kann. Diese Einheit wird dann in den Schaltelementrahmen eingebracht.

Eine besondere Ausführungsform des Schaltelementes sieht die Verwendung eines Schaltelementes mit einem Schaltelementrahmen aus Metall vor. Bei dieser Ausführung können die Montagebuchsen direkt an den Schaltelementrahmen angeformt, oder als zusätzliches Bauteil eingebracht werden. Weitere Ausgestaltungsvarianten der Erfindung sehen Befestigungspunkte und Aufnahmen für z.B. den Antrieb des Schaltelementes oder die Abgasrückführung vor.

Es ist vorteilhaft die Klappen mittels Montagespritztechnik in die Klappenrahmen einzubringen, dadurch entsteht eine kostengünstige sowie optimale Einpassung der Klappen in die Klappenrahmen.

Eine weitere Variante ist die Einbringung einer Metallachse, auf welche die Klappen aufgebracht sind. Bei starken mechanischen Belastungen läßt sich eine Metallachse nicht so sehr verformen, wie eine Kunststoffachse. Die Klappen können z.B. aus Kunststoff in einem Spritzgußvorgang auf die Achse aufgespritzt, oder aus Metall auf die Achse z.B. aufgeschraubt, genietet oder geschweißt sein.

Vorteilhaft ist die Einbringung der Achse mit den Klappen in den Schaltelementrahmen durch Einklipsen oder Schrauben der Achse in hierfür vorgesehene Aufnahmen. Diese Verfahren können auch bei der Verwendung von Klappenrahmen genutzt werden, wobei dann die Klappenrahmen am Schaltelementrahmen befestigt sind. Das Umspritzen der Stellelemente (Klappe, Achse, evtl. Klappenrahmen) mit dem Schaltelementrahmen stellt eine weitere Möglichkeit zu den bereits erwähnten Einbringüngsvarianten dar.

Eine besondere Variante der Erfindung sieht die Verwendung der Montagespritztechnik zur Herstellung der Achse mit den Klappen und dem Schaltelementrahmen vor. Hierbei kann der Klappenrahmen, sofern vorhanden, ebenfalls mitgefertigt werden. Bei einer Ausführung ohne Klappenrahmen übernimmt der Schaltelementrahmen die Aufgabe der Klappenrahmen.

Gemäß einer weiteren Ausgestaltung der Erfindung bestehen die Klappen aus einem oder mehreren Schiebern, die auf einer Achse angeordnet sind. Diese werden translatorisch entlang dieser Achse bewegt, wodurch die Öffnungen in den Saugkanälen geschlossen oder geöffnet werden können. Auch diese Bauform weist die bereits beschriebenen Vorteile eines geringen Platzbedarfes auf. Sind mehrere Schieber angeordnet, so müssen diese entlang der Achse miteinander gekoppelt werden, damit eine Verschiebung aller Schieber mittels des Antriebs möglich ist. Besonders vorteilhaft ist jedoch das Zusammenfassen der Einzeischieber zu einem einzigen großen Schieber, der in Form einer Platte im Klappenrahmen gehalten ist. Dieser kann zentral durch den Antrieb angesteuert werden.

Es ist vorteilhaft, den Schieber aus Federstahl herzustellen. Dieser kann besonders dünn ausgeführt werden und aufgrund seiner Elastizität gewisse Toleranzen im Bereich des Schaltelementrahmens ausgleichen. Auch Toleranzen, die durch die Montage des Schaltelementrahmens auf diesen übertragen werden, sind mit Hilfe des Schiebers aus Federstahl auszugleichen.

Besonders vorteilhaft ist die Ansteuerung des Schiebers mittels eines zweiseitig wirkenden Zylinders. Dies kann insbesondere ein Pneumatikzylinder sein, der durch die am Saugrohr anliegenden Druckunterschiede bewegt wird. Im Vergleich zu einem Zylinder mit Rückholfeder hat der zweiseitig wirkende Zylinder den Vorteil, dass dieser die Schaltkraft nicht entgegen der Federkraft aufbringen muss. Dadurch werden die Schaltkräfte, die durch die DrucKunterschiede aufgebracht werden müssen, verringert.

Diese und weitere Merkmale von bevorzugten Weiterbildungen der Erfindung gehen außer aus den Ansprüchen auch aus der Beschreibung und den Zeichnungen hervor.

### Zeichnung

Ausführungsbeispiele der Erfindung wird nachfolgend anhand der Zeichnungen erläutert.

Hierbei zeigt
- Figur 1: eine Saugrohranlage im Längsschnitt, entsprechend dem Stand der Technik,
- Figur 2: eine Saugrohranlage im Querschnitt, entsprechend dem Stand der Technik,
- Figur 3: einer Variante des Schaltelements im Schnitt als Detail X aus Figur 2, entsprechend dem Stand der Technik,
- Figur 4: eine Saugrohranlage in perspektivischer Ansicht,
- Figur 5: einen Ausschnitt aus einer Saugrohranlage im Schnitt,
- Figur 6: einen Ausschnitt einer Saugrohranlage im Schnitt,
- Figur 7: einen Schaltelementrahmen mit als Schieber ausgeführten Klappen im in das Saugrohr eingebauten Zustand im Schnitt und
- Figur 8: den Schaltelementrahmen gemäß Figur 7 im eingebauten Zustand in der Aufsicht.

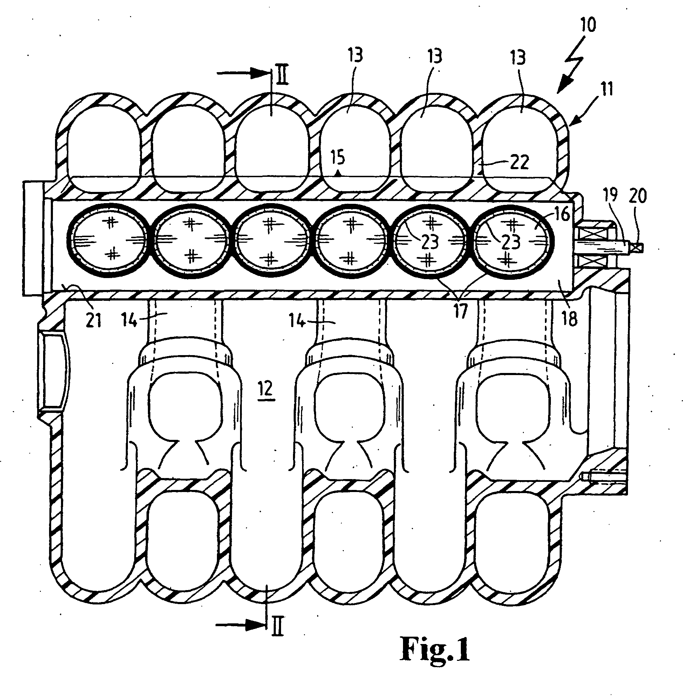

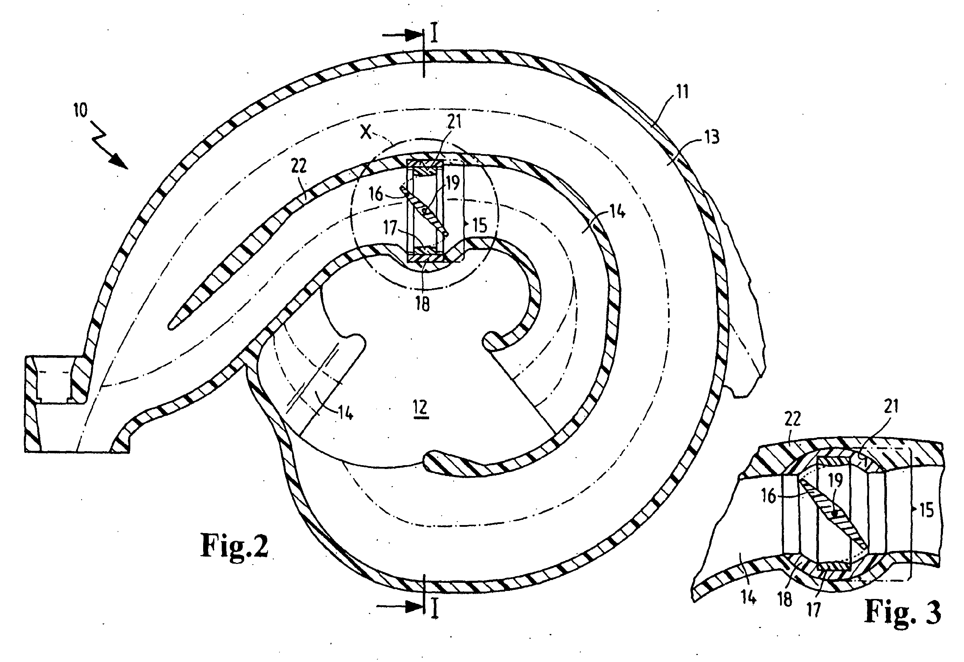

In Figur 1 ist eine Saugrohranlage 10 für einen Motor mit V-förmiger Zylinderanordnung im Schnitt entlang der Schnittlinie I-I gemäß Figur 2 dargestellt. Sie weist ein einstückiges Kunststoffgehäuse 11 auf, das einen zentralen Ansaugverteiler 12 enthält, von dem lange Saugrohre 13, welche parallel zueinander liegen, und kurze Saugrohre 14, die radial innerhalb der langen Saugrohre 13 angeordnet sind, ausgehen. Das Kunststoffgehäuse 11 umschließt ein Schaltelement 15, welches Klappen 16, Klappenrahmen 17, einen Schaltelementrahmen 18 und eine Achse 19 aufweist. Die Klappen 16 können eine, in Zweikomponententechnik hergestellte Dichtlippe 23 am Umfang aufweisen. Die Klappenstellung wird über die Achse 19 gesteuert, die zur besseren Kraftübertragung am Achsenende 20 z.B. einen Vierkant besitzt. Die Klappen 16 werden bei geschlossener Stellung von den umgebenden Klappenrahmen 17 dichtend umschlossen. Die Achse 19 ist in den Klappenrahmen 17 so gelagert, daß entlang der Achse 19 keine Leckage zwischen den kurzen Saugrohren 14 auftritt. Die Klappenrahmen 17 sind dichtend mit dem Schaltelementrahmen 18 verbunden. Beide Bauteile gewährleisten die Dichtheit der kurzen Saugrohre 14 gegenüber einer, im Kunststoffgehäuse 11 befindlichen, rechteckigen Öffnung 21, welche Durchbrüche zu jedem kurzen Saugrohr 14 aufweist, und in welche das Schaltelement 18 eingeschoben ist.
Bei einer Ausführung ohne Klappenrahmen 17 wird deren Funktion von dem Schaltelementrahmen 18 übernommen.

In Figur 2 ist die Saugrohranlage 10 im Schnitt entlang der Schnittlinie II-II dargestellt. Die kurzen Saugrohre 14 münden in die langen Saugrohre 13 kurz vor deren Austritt in einen Zylinder (hier nicht dargestellt). Die Saugrohre 13,14 sind untereinander durch Zwischenwände 22 getrennt, die einen Druckausgleich verhindern. Sobald die Klappe 16 geschlossen ist, kann keine Ansaugluft mehr durch das kurze Saugrohr 14 fließen. Die Ansaugluft muß daher durch das lange Saugrohr 13 fließen. Bei einer geöffneten Klappe 16 kann die Ansaugluft durch das kurze Saugrohr 14 fließen, welches auf Grund der Länge einen geringeren Strömungswiderstand aufweist. Bei dieser Darstellung ist die Dichtlippe 23 gemäß Figur 1 nicht dargestellt.

In Figur 3 ist eine weitere Möglichkeit zur Ausbildung des Schaltelements 15 dargestellt. Bei dieser Variante ist der Schaltelementrahmen 18 als Zylinder ausgeführt und in eine zylindrische Öffnung 21 eingeschoben. Die Klappen 16 sind wie bei der oben beschriebenen Lösung in Klappenrahmen 17 dichtend eingebracht, welcher sich wiederum in dem Schaltelementrahmen 18 befindet.

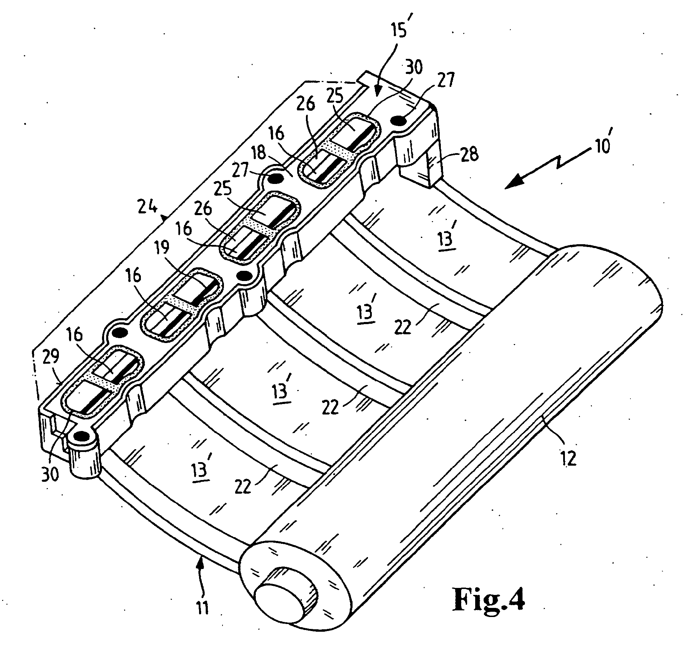

In Figur 4 ist eine Saugrohranlage 10' in perspektivischer Ansicht dargestellt. Sie weist im wesentlichen ein Kunststoffgehäuse 11 und ein Schaltelement 15' auf. Das Kunststoffgehäuse 11 umfaßt einen Ansaugverteiler 12, davon ausgehende lange Saugrohre 13', die durch Zwischenwände 22 voneinander getrennt sind, und eine Aufnahme 24 für das Schaltelement 15'. Das Schaltelement 15' wird von einem Schaltelementrahmen 18, Klappen 16 und einer einstückigen Achse 19 gebildet, wobei die Elemente aus Aluminium bestehen. Das Schaltelement 15' weist für jedes lange Saugrohr 13' einen ersten und einen zweiten Strömungsquerschnitt 25, 26 auf. Die ersten Strömungsquerschnitte 25 können nicht verschlossen werden, hier kann immer Luft durchströmen. Die zweiten Strömungsquerschnitte 26 können durch die Klappen 16 geöffnet oder verschlossen werden. Im ganz geöffneten Zustand kann somit eine wesentlich größere Luftmenge durch die Strömungsquerschnitte 25, 26 fließen, als im geschlossenen Zustand, wenn die Luft nur durch die ersten Strömungsquerschnitte 25 fließen kann. Das Schaltelement 15' weist Montagebuchsen 27 zur Befestigung an dem Zylinderkopfflansch (hier nicht dargestellt), welche in den Schaltelementrahmen 18 integriert sind, auf. Bei einem Schaltelementrahmen 18 aus einem relaxierenden Material würden die Montagebuchsen 27 als Einlege- bzw. Einpreßteil aus einem relaxationsfreien Material eingebracht werden. Weiterhin weist das Schaltelement eine Adapterplatte 28 auf, an welche z.B. der Antrieb für die Achse 19 befestigt werden kann. Die Aufnahme 24 ist so gestaltet, daß sie eine Anschlußfläche 29 an den Zylinderkopfflansch (hier nicht dargestellt) aufweist. Der erste und zweite Strömungsquerschnitt 25, 26 wird von einer umlaufenden Dichtung 30 umschlossen. Diese Dichtung 30 bewirkt, daß kein Leckluftstrom zwischen den nebeneinander angeordneten Strömungsquerschnitten der anderen Saugrohren 13' entsteht.

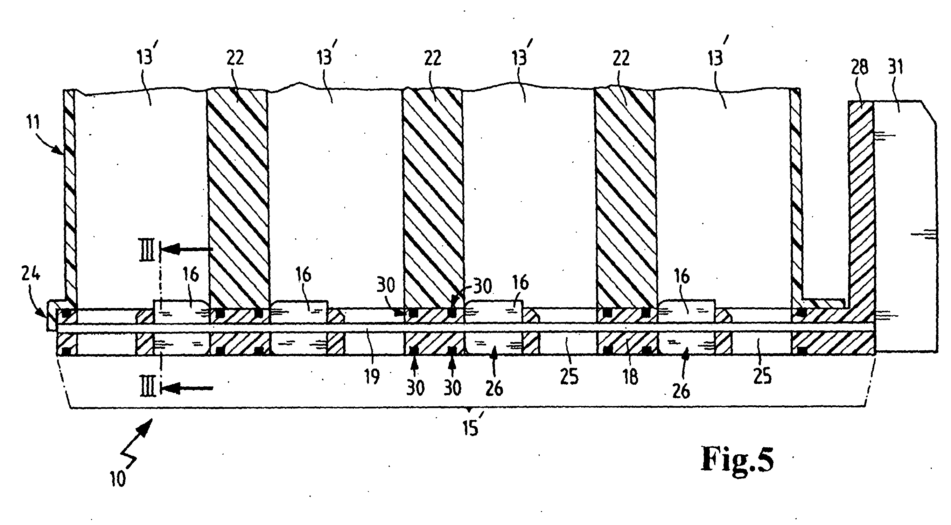

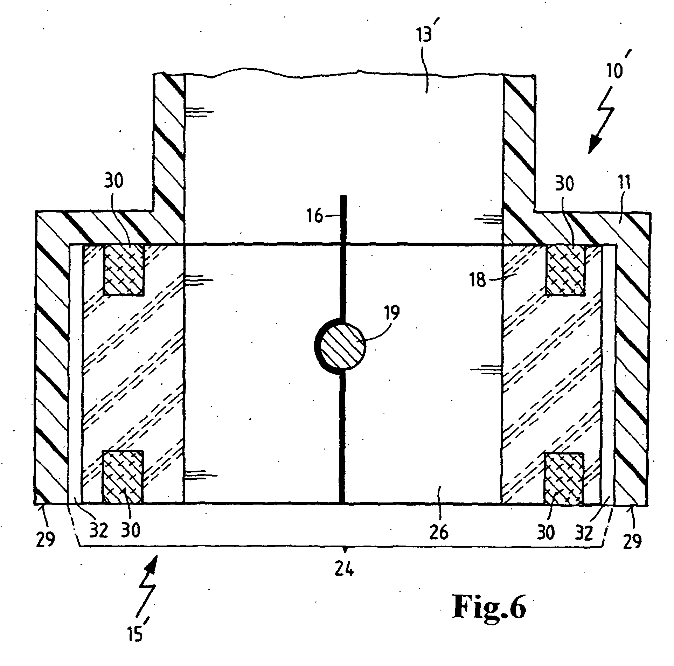

In Figur 5 ist ein Ausschnitt der Saugrohranlage 10 im Schnitt dargestellt. Das Kunststoffgehäuse 11 bildet die langen Saugrohre 13' und die Zwischenwände 22. Das Schaltelement 15' ist in die Aufnahme 24 des Kunststoffgehäuses 11 eingebracht. Bei diesem Ausführungsbeispiel weist die Aufnahme 24 keine Anschlußfläche 29 gemäß Figur 6 an den Zylinderkopffiansch (hier nicht dargestellt) auf. Zur Abdichtung der Saugrohre 13' untereinander sind Dichtungen 30 um jedes Strömungsquerschnittpaar, das von dem ersten und dem zweiten Strömungsquerschnitt 25, 26 gebildet wird, gelegt. Für jedes Saugrohr 13' sind zwei Dichtungen 30 notwendig, eine Dichtung 30 dichtet das Schaltelement 15' gegenüber dem Kunststoffgehäuse 11, die zweite Dichtung 30 dichtet das Schaltelement 15' gegenüber dem Zylinderkopfflansch (hier nicht dargestellt). Die Klappen 16 sind auf einer durchgängigen Achse 19 befestigt. Die Achse 19 ist in dem Schaltelementrahmen 18 drehbar gelagert und wird von einem Antrieb 31, welcher an der Adapterplatte 28 befestigt ist angetrieben.

In Figur 6 ist ein Ausschnitt der Saugrohranlage 10 im Schnitt entlang der Schnittlinie III - III gemäß Figur 5 dargestellt. An das Kunststoffgehäuse 11 ist die Aufnahme 24 für das Schaltelement 15' angeformt. Die Aufnahme 24 weist die Anschlußfläche 29 auf, welche mit dem Schaltelementrahmen in einer Höhe liegt. Aufgrund unterschiedlicher Materialien dehnen sich Schaltelement 15' und Kunststoffgehäuse 11 bei Temperaturschwankungen unterschiedlich aus. Um Spannungen in der Aufnahme 24 und eventuellen Beschädigungen vorzubeugen, ist ein Spalt 32 vorgesehen, der als Ausdehnungspuffer dient.

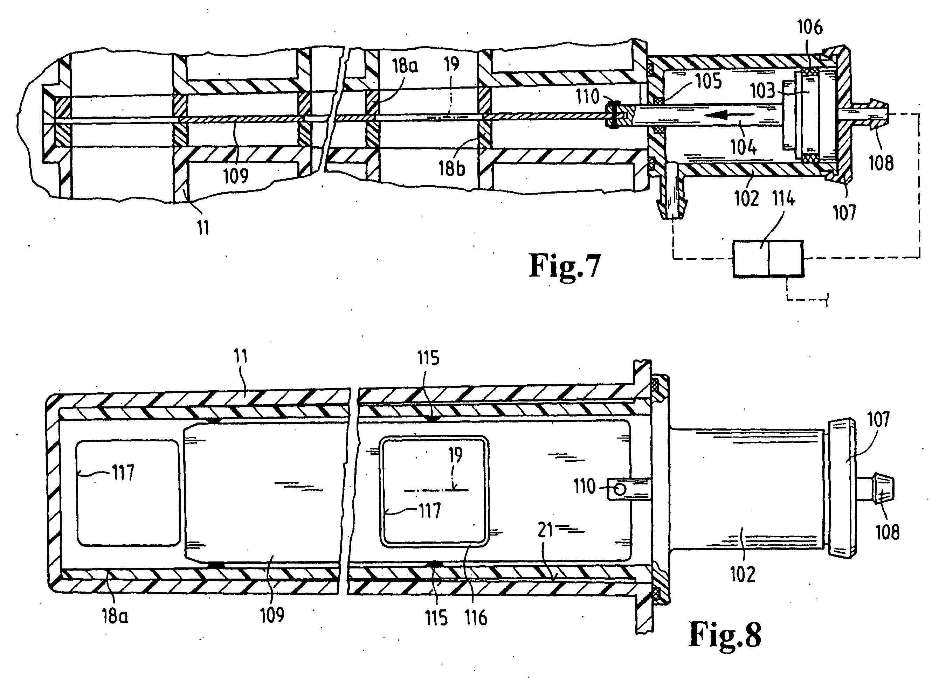

In Figur 7 ist ein Schaltelementrahmen 18a, b dargestellt, in den ein Schieber 109 auf der Achse 19 translatorisch verschiebbar eingebracht ist. Dieses Schaltelement kann sowohl in einem Saugrohr gemäß Figur 1 anstelle des dort eingesetzten Schaltelementrahmens 18a, b als auch in einem Saugrohr gemäß Figur 4 eingesetzt werden.

Schaltelementrahmen 18a, b und Schieber 109 ergeben ein Schaltmodul. Dieses besteht aus einem Unterteil 18b mit einem angespritzten Pneumatikzylinder 102. Ein Kolben 103 mit einer Schubstange 104 wird in den Zylinder 102 eingesetzt. Die Schubstange 104 wird mit einer Radialdichtung 105 abgedichtet, der Kolben mit einem weiteren Dichtelement 106. Ein Deckel 107 mit Anschluß 108 kann verrastet oder eingeschraubt sein. Der Schieber 109, der aus Federstahl gefertigt ist, wird eingelegt, wobei die Verbindung zwischen Schieber 109 und Schubstange 104 zum Beispiel mittels einer Nietverbindung 110 erfolgen kann. Oberteil 18a und Unterteil 18b des Schaltelementrahmens werden gegenseitig verrastet. Dabei sind die Teile so ausgebildet, dass der Schieber 109 spielfrei und trotzdem leicht gängig ist. Hierzu dienen die in Figur 8 dargestellten Führungsnoppen 115.

In dieser Figur ist auch der Aufbau des Schiebers 109 zu erkennen. Dieser weist Fenster 116 auf, die sich bei translatorischer Bewegung über die Querschnitte 117 der zu verschließenden Saugkanäle schieben. Dadurch ist eine stufenlose bzw. vollständige Verschließungsmöglichkeit der Kanäle gegeben. Zur Bewegung des Schiebers 109 kann der Pneumatikzylinder 102 beispielsweise durch ein 4/2 Wegeventil 114 angesteuert werden.

Der Schaltelementrahmen 18a, b ist in das Kunststoffgehäuse 11 des Saugrohrs eingeschoben. Das Gehäuse ist nur ausschnittsweise dargestellt. Die Öffnung 21 zum Einbau des Schaltelementrahmens 18a, b ist leicht konisch ausgeführt, so dass eine zuverlässige Anlage desselben im Kunststoffgehäuse 11 zustandekommt. Hierdurch können die Auswirkungen von Toleranzen der einzelnen Bauteile bei der Montage verringert werden.

## Patentansprüche

1. Saugrohranlage (10) für eine Mehrzylinder-Brennkraftmaschine, mit
- einem Ansaugverteiler (12)
- Einzelsaugrohren (13'), die von dem Ansaugverteiler (12) ausgehen und in mindestens einem Zylinderkopfflansch enden, und
- einem Schaltelement (15') zum Absperren oder Freigeben eines Teils der durch die Einzelsaugrohre (13') gebildeten Querschnitte,
- wobei das Schaltelement mindestens zwei Klappen (16), die auf einer Achse (19) angeordnet und in einem gemeinsamen Schalteiementrahmen (18) eingebracht sind, aufweist und
- wobei das Schaltelement (15') als komplette Einheit dichtend in einer Aufnahme (24) in die Saugrohranlage (10) eingebracht ist, wobei das Schaltelement (15') an den Zylinderkopfflansch anschließt wobei die Achse (19) mit den von einem Klappenrahmen (17) umgebenen Klappen (16) und dem Schaltelementrahmen (18) in Montagespritztechnik hergestellt ist,
**dadurch gekennzeichnet, dass** die Klappen (16) aus einem oder mehreren Schiebern bestehen, welche entlang der Achse (19) translatorisch verschiebbar im Schaltelementrahmen (18a, b) angeordnet sind.

2. Saugrohranlage (10) nach Anspruch 1, **dadurch gekennzeichnet, dass** die Saugrohranlage (10) einen Teil der Anschlussfläche (24) des Zylinderkopfflansches bildet.

3. Saugrohranlage (10) nach einem der Ansprüche 1 oder 2, **dadurch gekennzeichnet, dass** an das Schaltelement (15') Montagebuchsen (27) für die Befestigungsbohrungen des Zylinderkopfflansches angebracht sind, die aus einem relaxationsfreien Material bestehen.

4. Saugrohranlage (10) nach einem der vorangehenden Ansprüche, **dadurch gekennzeichnet, dass** der Schieber aus Federstahl hergestellt ist

5. Saugrohranlage nach einem der vorangehenden Ansprüche, **dadurch gekennzeichnet, dass** der Schieber mit einem zweiseitig wirkenden Zylinder als Antrieb verbunden ist.

## Claims

1. Intake manifold (10) for a multi-cylinder internal combustion engine, said intake manifold including
- an intake distributor (12),
- individual intake tubes (13'), which proceed from the intake distributor (12) and end in at least one cylinder head flange, and
- a switching member (15') for closing or opening a portion of the cross-section formed by the individual intake tubes (13'),
- wherein the switching member includes at least two flaps (16), which are disposed on an axle (19) and are mounted in a common switching member frame (18), and
- wherein the switching member (15') is inserted into the intake manifold (10) in the form of a complete unit sealed in a receiving means (24), wherein the switching member (15') abuts against the cylinder head flange, wherein the axle (19), with the flaps (16), surrounded by a flap frame (17), and the switching member frame (18), is produced by means of assembly injection moulding,
**characterised in that** the flaps (16) comprise one or a plurality of slides, which are disposed in the switching member frame (18a, b) so as to be displaceable in a translatory manner along the axle (19).

2. Intake manifold (10) according to claim 1, **characterised in that** the intake manifold (10) forms a portion of the connecting face (24) of the cylinder head flange.

3. Intake manifold (10) according to one of claims 1 or 2, **characterised in that** mounting bushings (27) for the mounting bores of the cylinder head flange are mounted on the switching member (15'), said mounting bores being produced from a non-relaxing material.

4. Intake manifold (10) according to one of the preceding claims, **characterised in that** the slide is produced from spring steel.

5. Intake manifold according to one of the preceding claims, **characterised in that** the slide is connected to a double-acting cylinder as the driving means.

## Revendications

1. Ensemble collecteur d'admission (10) pour un moteur à combustion interne multicylindres comprenant
- un collecteur d'admission (12)
- des conduits d'admission individuels (13') qui partent du collecteur d'admission (12) et se terminent par au moins une bride de joint de culasse et
- un élément de commutation (15') pour bloquer ou débloquer une partie des sections formées par les conduits d'admission (13') individuels,
- l'élément de commutation présentant au moins deux clapets (16), qui sont disposés sur un axe (19) et introduits dans un cadre d'éléments de commutation commun (18) et
- l'élément de commutation (15') étant introduit de manière étanche, en tant qu'unité complète, dans un logement (24) dans l'ensemble collecteur d'admission (10), l'élément de commutation (15') étant raccordé à la bride de joint de culasse, l'axe (19) avec les deux clapets (16) entourés par un cadre à clapets (17) et le cadre d'éléments de commutation (18) étant fabriqués par une technique de montage par injection,
**caractérisé en ce que**
les clapets (16) sont constitués d'un ou de plusieurs coulisseaux disposés le long de l'axe (19) de manière coulissante transversalement dans le cadre d'éléments de commutation (18a, b).

2. Ensemble collecteur d'admission (10), selon la revendication 1,
**caractérisé en ce qu'**
il constitue une partie de la face de raccordement (24) de la bride de joint de culasse.

3. Ensemble collecteur d'admission (10) selon l'une quelconque des revendications 1 ou 2,
**caractérisé en ce que**
des douilles de montage (27) destinés aux alésages de fixation de la bride de joint de culasse sont disposées sur l'élément de commutation (15'), douilles constituées d'une matière sans relaxation.

4. Ensemble collecteur d'admission selon l'une quelconque des revendications précédentes,
**caractérisé en ce que**
le coulisseau est fabriqué dans un acier à ressorts.

5. Ensemble collecteur d'admission (10) selon l'une quelconque des revendications précédentes,
**caractérisé en ce que**
le coulisseau est relié à un vérin à double effet en tant qu'entraînement.
